# EUROPÄISCHE PATENTSCHRIFT

(11) **EP 0 273 211 B1**
(45) Veröffentlichungstag und Bekanntmachung des Hinweises auf die Patenterteilung: **29.09.1993**
(21) Anmeldenummer: 87117628.5
(22) Anmeldetag: 28.11.1987
(51) Int. Cl.: H04N 5/44

(54) **Fernsehempfänger mit einem mikroprozessorgesteuerten Bedienteil und mit einem Schaltnetzteil**
Television receiver having an operating unit controlled by a microprocessor, and a switched-mode power supply
Récepteur TV avec une commande à microprocesseur et avec une alimentation commutée

(30) Priorität: 03.12.1986 DE 3641303
(43) Veröffentlichungstag der Anmeldung: 06.07.1988
(73) Patentinhaber: Deutsche Thomson-Brandt GmbH, 78003 Villingen-Schwenningen (DE)
(72) Erfinder: Dieterle, Franz, D-7731 Unterkirnach (DE); Hartmann, Uwe, D-7730 Villingen-Schwenningen (DE); Geiger, Erich, D-7731 Unterkirnach (DE); Mai, Udo, D-7730 VS-Villingen 23 (DE)

(56) Entgegenhaltungen:
- FR-A- 2 509 105
- GB-A- 2 066 598
- FUNK-TECHNIK, Band 39, Nr. 5, Mai 1984, Seiten 186-190; A. KRUEGER: "Neues Konzept für ein fortschrittliches TV-System"
- IEEE TRANSACTIONS ON CONSUMER ELCTRONICS, Band CE-31, Nr. 3, August 1985, Seiten 24-25, IEEE; M. VAN DEN DRIESSCHE et al.: "TV power processor I.C. master slave concept"

## Beschreibung

Die vorliegende Erfindung betrifft eine Anordnung zur Steuerung eines Fernsehempfängers mit einem Schaltnetzteil, einem Amplitudensieb, dem das FBAS-Signal zugeführt wird und das einen ersten Ausgang für zeilenfrequente Impulse und einen zweiten Ausgang für bildfrequente Impulse besitzt, einem Mikroprozessor, einem Clockgenerator in PLL-Technik, wobei der Ausgang des Clockgenerators mit dem Clockeingang des Mikroprozessors sowie über eine Frequenzteilerschaltung mit dem ersten Eingang einer ersten Phasenvergleichstufe verbunden ist und der Ausgang der Frequenzteilerschaltung mit einer Sägezahnspannungsformereinheit und an einen ersten Eingang einer Vertikal-Logik geschaltet ist, deren zweiter Eingang mit dem zweiten Ausgang des Amplitudensiebes verbunden ist und der Ausgang der Vertikal-Logik mit einem ersten Eingang einer logischen Schaltung verbunden ist, und wobei der erste Ausgang des Amplitudensiebes mit dem zweiten Eingang der ersten Phasenvergleichstufe verbunden ist.

Sowohl der Mikroprozessor als auch das Schaltnetzteil und die Ablenkstufen benötigen ein Taktsignal, mit dem der Mikroprozessor nach festgelegten Arbeitszyklen ein Programm abarbeitet bzw. mit dem das oft als Sperrwandler ausgebildete Schaltnetzteil zumeist mit Zeilenfrequenz oder einem Vielfachen davon getaktet wird und die Ablenkstufen mit den aus diesen aufbereiteten Steuersignalen versorgt werden. Für den Mikroprozessor benötigt man zur Erzeugung der Taktfrequenz einen quarzstabilen Oszillator, der eine Frequenz von z.B. 4 MHz erzeugt. Für das Schaltnetzteil wird mitunter ein Oszillator mit einem Keramikschwinger, der z.B. eine Frequenz von 500 kHz erzeugt, verwendet.

In der FR-A-2 509 105 ist ein System beschrieben, in welchem ein Mikroprozessor vorgesehen ist, dessen Takteingang mit Clockimpulsen beaufschlagt ist, die aus einem Oszillator stammen, der mit dem Zeilensynchronsignal eines Fernsehsignals verkoppelt. Ein von dem Mikroprozessor gesteuertes Schaltnetzteil ist aber hierbei nicht vorgesehen.

Der Erfindung liegt die Aufgabe zugrunde, eine Anordnung zu schaffen, die in kompakter Bauweise, die z.B. als integrierte Schaltung aufgebaut sein kann, die Ansteuersignale und die Signale für den Pulsbreitenmodulator in einem Schaltnetzteil mikroprozessorgesteuert zu liefern, wobei die Steuersignale von dem Mikroprozessor zu- und abschaltbar sind.

Die Erfindung bringt den Vorteil, daß damit ein energiesparender Stand-by-Betrieb möglich ist, indem die Ansteuerimpulse erst zugeschaltet werden, wenn das Schaltnetzteil bereits arbeitet. Diese Aufgabe wird durch die im Patentanspruch angegebenen Maßnahmen gelöst. Weitere vorteilhafte Ausgestaltungen der Erfindung ergeben sich aus den abhängigen Ansprüchen.

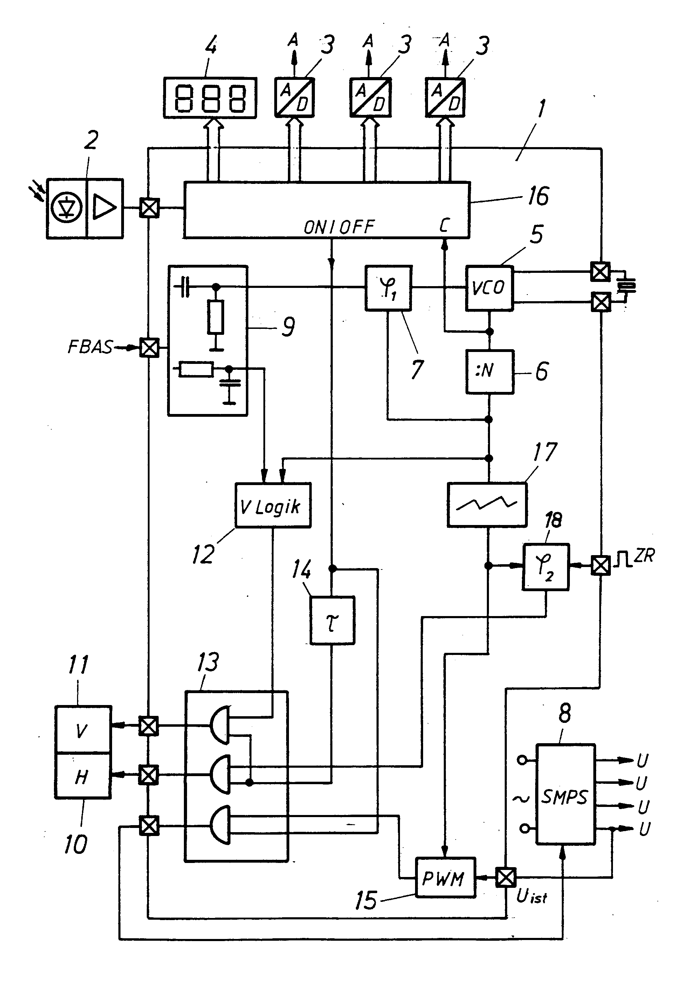

Nachstehend wird die Erfindung an einem Ausführungsbeispiel mit Hilfe der Zeichnung erläutert.

Die Figur stellt die für die Erfindung wesentlichen Schaltungsteile in einem Blockschaltbild dar.

Mit 16 ist ein Mikroprozessor gekennzeichnet, welcher in einem Fernsehempfänger unter anderem die von einem Detektor 2 empfangenen Fernsteuersignale zu Steuersignalen umformt, die über Digital-Analog-Wandler 3 zu analogen Steuersignalen A gebildet werden, oder die über eine BUS-Leitung zur Steuerung von Bedienfunktionen verwendet werden. über eine digitale oder analoge Anzeige 4 können Einstellwerte angezeigt werden. Der Mikroprozessor 16 z.B. der Type HD 404918P der Firma HIACHI benötigt ein Clock-Signal entsprechend seiner Arbeitsfrequenz, das hier über einen spannungsgesteuerten Oszillator (VCO) 5 erzeugt und dem Mikroprozessor 16 zugeführt wird. Die Erzeugung der Clock-Frequenz geschieht in dem gezeigten Ausführungsbeispiel in bekannter PLL-Technik, indem diese über einen Frequenzteiler 6 in einer Phasenvergleichsstufe 7 mit einer Referenzfrequenz verglichen wird. In dem Fernsehempfänger befindet sich auch mindestens ein in Frequenz und Phase synchronisierter Oszillator, der die Signale zur Steuerung des Schaltnetzteils 8 und für die Zeilenablenkung und gegebenenfalls für die Vertikallogik 12 erzeugt. Die Vertikallogik 12 kann z.B. in Form einer Count-down-Schaltung aufgebaut sein. Eine derartige Vertikallogik ist z.B. in der DE-PS 31 27 493 ausführlich beschrieben. Der Clock-Oszillator 5 des Mikroprozessors 16 wird zur Steuerung des Schaltnetzteils 8 und der Ablenkstufen 10 und 11 mit herangezogen. Hierzu wird er mit der Zeilenfrequenz des Fernsehsignals FBAS synchronisiert. Das FBAS-Signal gelangt über ein Amplitudensieb 9 an die Phasenvergleichsstufe 7 des PLL-Kreises, so daß die durch den Frequenzteiler 6 geteilte Frequenz des Oszillators 5 auf die Zeilenfrequenz des FBAS-Signals einrastet.

Aus diesem zeilenfrequenten Signal wird in einer Schaltung 17 ein zeilenfrequentes Sägezahnsignal geformt. Dieses Sägezahnsignal gelangt auf einen Eingang eines Pulsbreitenmodulators 15. An einen anderen Eingang des Pulsbreitenmodulators 15 ist die Ist-Information Uᵢₛₜ aus dem Schaltnetzteil 8 gelegt, so daß in Abhängigkeit von dieser Ist-Information ein pulsbreitenmoduliertes Signal für die Ansteuerung des Schaltnetzteils 8 entsteht.

Das Signal aus der Schaltung 17 wird ausserdem mit dem Zeilenrücklauf ZR in einer Phasenvergleichsstufe 18 verglichen, aus dem das Ansteuersignal für die Horizontalablenkstufe 10 genommen wird. Die Signale aus den Stufen 12, 15 und 18 werden auf einen Schalter (13) mit drei Eingängen und drei Ausgängen gegeben, der durch ein digitales Steuersignal ein- und ausschaltbar ist. Ein derartiger Schalter kann z.B. in Form des integrierten Schaltkreises Type MC 14081 der Firma Motorola aufgebaut sein, wie er in dem Handbuch Semiconductor Library C-MOS Volume 5 1976 Seite 5 - 150 beschrieben ist. Es ist auch nur ein Ausgang für die Ansteuersignale denkbar, wobei das kombinierte Ansteuersignal als Tri-State-Signal ausgebildet ist. Ein solches Signal besteht aus drei verschiedenen Pegeln, von denen jeder einem Steuersignal zugeordnet ist. Die unterschiedlichen Pegel können in einer Pegeldetektorschaltung wieder in drei verschiedene Signale umgewandelt werden.

Durch die zuvor beschriebene Anordnung kann der Fernsehempfänger in einfacher Weise ein- und ausgeschaltet werden, indem über die vom Mikroprozessor 16 gesteuerte Schaltstufe 13 die Ansteuerimpulse für das Schaltnetzteil 8 und die Horizontal-(10) und Vertikalablenkstufe (11) zu- und abschaltbar sind. Zwecks Einsparung von Einschaltenergie kann eine zeitliche Verzögerung der Ansteuerimpulse für die Ablenkstufe vorgesehen werden, indem diese über eine Verzögerungsschaltung 14 erst nach Einschalten des Schaltnetzteils 8 erscheinen. Hierdurch ist ein energiesparender Stand-by-Betrieb möglich.

Der Mikroprozessor 16 sowie die übrigen Bauteile 5, 6, 7, 9, 12, 13, 14, 15, 17, 18 sind zweckmäßigerweise in einer einzigen neuartigen mit 1 bezeichneten integrierten Schaltung zusammengefasst.

## Patentansprüche

1. Anordnung zur Steuerung eines Fernsehempfängers mit einem Schaltnetzteil (8), einem Amplitudensieb (9), dem das FBAS-Signal zugeführt wird und das einen ersten Ausgang für zeilenfrequente Impulse und einen zweiten Ausgang für bildfrequente Impulse besitzt, einem Mikroprozessor (16), einem Clockgenerator (5) in PLL-Technik, wobei der Ausgang des Clockgenerators (5) mit dem Clockeingang (C) des Mikroprozessors (16) sowie über eine Frequenzteilerschaltung (6) mit dem ersten Eingang einer ersten Phasenvergleichstufe (7) verbunden ist und der Ausgang der Frequenzteilerschaltung (6) mit einer Sägezahnspannungsformereinheit (17) und an einen ersten Eingang einer Vertikal-Logik (12) geschaltet ist, deren zweiter Eingang mit dem zweiten Ausgang des Amplitudensiebes (9) verbunden ist und der Ausgang der Vertikal-Logik (12) mit einem ersten Eingang einer logischen Schaltung (13) verbunden ist, und wobei der erste Ausgang des Amplitudensiebes (9) mit dem zweiten Eingang der ersten Phasenvergleichstufe (7) verbunden ist,
**dadurch gekennzeichnet,**
daß eine zweite Phasenvergleichstufe (18) vorgesehen ist, deren erstem Eingang die von der Sägezahnformereinheit (17) erzeugten Signale und deren zweitem Eingang Zeilenrücklaufimpulse (ZR) des Fernsehempfängers zugeführt werden, und daß der Ausgang der zweiten Phasenvergleichstufe (18) mit dem zweiten Eingang der logischen Schaltung (13) verbunden ist und daß der Ausgang der Sägezahnspannungsformereinheit (17) mit dem Eingang eines Impulsbreitenmodulators (15) verbunden ist, dessen Ausgang mit einem dritten Eingang der logischen Schaltung (13) verbunden ist, und daß die logische Schaltung (13) Ausgänge besitzt zur Ansteuerung der Vertikalstufe (11), der Horizontalstufe (10) und zur Ansteuerung des Schaltnetzteils (8), wobei jeder Ausgang der logischen Schaltung (13) zur Ansteuerung der Stufen (10, 11) - gegebenenfalls über eine Verzögerungsschaltung (14) - und zur Ansteuerung des Schaltnetzteils (8) über den Ausgang (ON, OFF) des Mikroprozessors (16) ein- und ausschaltbar ist.

2. Anordnung nach Anspruch 1, **dadurch gekennzeichnet,** daß die Ansteuersignale für die Horizontalablenkschattung (10) und für das Schaltnetzteil (8) zu einem einzigen Signal zusammengefaßt sind.

3. Anordnung nach Anspruch 1, **dadurch gekennzeichnet,** daß die Bauteile (5, 6, 7, 9, 12, 13, 14, 15, 16, 17, 18) in einer integrierten Schaltung zusammengefaßt sind.

4. Anordnung nach Anspruch 1, 2 oder 3, **dadurch gekennzeichnet,** daß die Ansteuersignale für die Horizontalablenkschaltung (10) die Vertikalablenkschaltung (11) sowie für das Schaltnetzteil (8) über einen einzigen Ausgang der integrierten Schaltung (1) in Form eines Tri-State-Signals ausgebbar sind.

## Claims

1. Arrangement for the control of a television receiver having a switched power supply (8), an amplitude discriminator (9) to which the FBAS signal is supplied and which has a first output for line frequency pulses and a second output for frame frequency pulses, a microprocessor (16), a clock generator (5) utilising a PLL, wherein the output of the clock generator (5) is connected to the clock input (C) of the microprocessor (16) as well as, via a frequency divider circuit (6), to the first input of a first phase comparison stage (7) and the output of the frequency divider circuit (6) is connected to a sawtooth voltage shaping unit (17) and to a first input of a vertical logic (12) whose second input is connected to the second output of the amplitude discriminator (9) and the output of the vertical logic (12) is connected to a first input of a logic circuit (13) and wherein the first output of the amplitude discriminator (9) is connected to the second input of the first phase comparison stage (7), characterised in that, a second phase comparison stage (18) is provided to whose first input the signal generated by the sawtooth voltage shaping unit (17) and to whose second input line flyback pulses (ZR) of the television receiver are supplied, and that the output of the second phase comparison stage (18) is connected to the second input of the logic circuit (13) and that the output of the sawtooth voltage shaping unit (17) is connected to the input of a pulse width modulator (15) whose output is connected to a third input of the logic circuit (13) and that the logic circuit (13) has outputs for the control of the vertical stage (11), the horizontal stage (10) and for the control of the switched power supply (8), wherein each output of the logic circuit (13) is switchable on and off for the control of the stages (10, 11) - if necessary via a delay circuit (14) - and for the control of the switched power supply (8) via the output (ON, OFF) of the microprocessor (16).

2. Arrangement in accordance with Claim 1, characterised in that, the control signals for the horizontal deflection circuit (10) and for the switched power supply (8) are combined into a single signal.

3. Arrangement in accordance with Claim 1, characterised in that, the components (5, 6, 7, 9, 12, 13, 14, 15, 16, 17, 18) are combined in an integrated circuit.

4. Arrangement in accordance with Claim 1, 2 or 3, characterised in that, the control signals for the horizontal deflection circuit (10), the vertical deflection circuit (11), as well as for the switched power supply (8) are transmissible via a single output of the integrated circuit (1) in the form of a tri-state signal.

## Revendications

1. Dispositif pour la commande d'un récepteur de télévision avec un bloc d'alimentation et de commutation (8), un séparateur de synchronisation (9) auquel est amené le signal composé de chrominance et qui possède une première sortie pour les impulsions à fréquence ligne et une seconde sortie pour les impulsions à fréquence image, avec un microprocesseur (16), un générateur d'horloge (5) en technique PLL (à boucle à verrouillage de phase), la sortie du générateur d'horloge (5) étant reliée à l'entrée d'horloge (C) du microprocesseur (16) et, par l'intermédiaire d'un circuit diviseur de fréquence (6) à la première entrée d'un premier étage comparateur de phase (7) et la sortie du circuit diviseur de fréquence (6) étant reliée à une unité de formation de tension en dent de scie (17) et étant commutée à une première entrée d'une logique verticale (12) dont la seconde entrée est reliée à la seconde sortie du séparateur de synchronisation (9) et la sortie de la logique verticale (12) étant reliée à une première entrée d'un circuit logique (13), la première sortie du séparateur de synchronisation (9) étant reliée à la seconde entrée du premier étage comparateur de phase (7),
**caractérisé en ce**
qu'un second étage comparateur de phase (18) est prévu à la première entrée duquel les signaux produits par l'unité de formation en dent de scie (17) sont amenés et à la seconde entrée duquel des impulsions de retour de balayage horizontal (ZR) du récepteur de télévision sont amenées et que la sortie du second étage comparateur de phase (18) est reliée à la seconde entrée du circuit logique (13) et que la sortie de l'unité de formation de tension en dent de scie (17) est reliée à l'entrée d'un modulateur d'impulsions en durée (15) dont la sortie est reliée à une troisième entrée du circuit logique (13) et que le circuit logique (13) possède des sorties pour l'excitation de l'étage vertical (11), de l'étage horizontal (10) et pour l'excitation du bloc d'alimentation et de commutation (8), chaque sortie du circuit logique (13) pour l'excitation des étages (10, 11) pouvant être mis en et hors circuit - le cas échéant par l'intermédiaire d'un circuit de temporisation (14) - et pour l'excitation du bloc d'alimentation et de commutation (8) par l'intermédiaire de la sortie (ON, OFF) du microprocesseur (16).

2. Dispositif selon la revendication 1, **caractérisé en ce** que les signaux d'excitation pour le circuit de balayage horizontal (10) et pour le bloc d'alimentation et de commutation (8) sont réunis en un signal unique.

3. Dispositif selon la revendication 1, **caractérisé en ce** que les composants (5, 6, 7, 9, 12, 13, 14, 15, 16, 17, 18) sont réunis en un circuit intégré.

4. Dispositif selon la revendication 1, 2 ou 3, **caractérisé en ce** que les signaux d'excitation pour le circuit de balayage horizontal (10), le circuit de balayage vertical (11) ainsi que pour le bloc d'alimentation et de commutation (8) peuvent être sortis par l'intermédiaire d'une sortie unique du circuit intégré (1) sous forme d'un signal tri-state.
